(19) Europäisches Patentamt
European Patent Office
Office européen des brevets

(11) Publication number: **0 001 537**
**B1**

(12) **EUROPEAN PATENT SPECIFICATION**

(45) Date de publication du fascicule du brevet: **09.02.83**

(21) Numéro de dépôt: **78420007.3**

(22) Date de dépôt: **04.09.78**

(51) Int. Cl.³: **C 01 D 1/28,** C 01 D 1/32, C 01 D 7/26, C 01 G 31/00, C 01 G 39/00, C 01 G 43/00

# (54) Procédé de traitement de solutions contenant des carbonate, sulfate, éventuellement hydroxyde de sodium ou potassium, ainsi que l'un au moins des métaux vanadium, uranium, molybdène.

(30) Priorité: **30.09.77 FR 7730176**
**18.08.78 FR 7824843**
**18.08.78 FR 7824844**

(43) Date de publication de la demande:
**18.04.79 Bulletin 79/8**

(45) Mention de la délivrance du brevet:
**09.02.83 Bulletin 83/6**

(84) Etats contractants désignés:
**DE FR GB NL SE**

(56) Documents cités:
**FR - A - 1 264 390**
**FR - A - 2 328 660**
**US - A - 3 002 809**
**US - A - 3 508 884**

(73) Titulaire: **ALUMINIUM PECHINEY**
**28, rue de Bonnel**
**F-69433 Lyon Cedex 3 (FR)**

(72) Inventeur: **Maurel, Pierre**
**11, Place des Sophoras "Les Tourelles"**
**F-13100 Aix-en-Provence (FR)**
Inventeur: **Bosca, Bernard**
**Immeuble Le Cezanne Bâtiment C1 Chemin des Aires**
**F-13120 Gardanne (FR)**
Inventeur: **Nicolas, François**
**L'Oliveraie Bâtiment 11 Route de Nice**
**F-13100 Aix-en-Provence (FR)**

(74) Mandataire: **Gaucherand, Michel et al,**
**PECHINEY UGINE KUHLMANN 28 rue de Bonnel**
**F-69433 Lyon Cedex 3 (FR)**

**EP 0 001 537 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Procédé de traitement de solutions contenant des carbonate, sulfate, éventuellement hydroxyde de sodium ou potassium, ainsi que l'un au moins des métaux vanadium, uranium, molybdène

La présente invention concerne un procédé de traitement de solutions contenant des composés appartenant au groupe constitué par des carbonate, sulfate, hydroxyde ou hydrogénocarbonate de l'un des métaux alcalins, sodium ou potassium, ainsi que principalement l'un au moins des métaux appartenant au groupe constitué par le vanadium, l'uranium et le molybdène, sous la forme de sels de sodium ou de potassium et, enfin, des impuretés minérales et/ou organiques.

Par impureté, il faut entendre dans la présente description, tous anions et cations, autres que ceux précités, ainsi que les matières organiques.

On sait déjà que des minerais tels que certains minerais uranifères, en encore vanadifères, sont soumis à une attaque par de l'hydroxyde de sodium en solution ou par des carbonate et bicarbonate de sodium en solution selon le type du minerai traité, ces solutions d'attaque provenant en partie d'un recyclage et en partie d'un approt de réactif.

Ainsi, dans le cas d'un minerai uranifère, par exemple, le minerai étant attaqué par une liqueur de carbonate et/ou bicarbonate de sodium, l'uranium solubilisé, présent dans la liqueur après attaque, est usuellement précipité sous la forme d'un uranate de sodium qui peut être transformé par les moyens connus suivants: soit en un uranate d'ammonium cristallisé par une transposition silfo-ammonique, qui consiste à traiter l'uranate de sodium par une solution de sulfate d'ammonium, soit en un peroxyde d'uranium par redissolution sulfurique et précipitation dudit peroxyde par introduction d'eau oxygénée.

En même temps que le métal principal, se dissolvent à l'état de sels de sodium, d'autres éléments, tels que par exemple le soufre, divers autres métaux et des matières organiques contenus dans le minerai.

Depuis lors, un autre cycle d'attaque de minerais uranifères a été décrit, qui consiste, selon un procédé d'attaque oxydante à chaud desdits minerais, à les traiter par une solution aqueuse de bicarbonate et carbonate de potassium en présence d'oxygène libre insufflé sous pression dans le milieu réactionnel.

Selon la constitution initiale du minerai et selon l'importance et la nature des agents complémentaires introduits pour faciliter l'attaque, il en résulte un enrichissement en carbonate, sulfate hydroxyde ou hydrogénócarbonate de sodium ou de potassium de la solution après attaque.

Ainsi, la liqueur après attaque renferme à la fois le métal recherché et des impuretés provenant des liqueurs recyclées ainsi que celles solubilisées lors de l'attaque. Or, il est bien connu que, dans les procédés d'attaque avec recyclage des réactifs non consommés, il est indispensable de limiter les teneurs en impuretés présentes dans les solutions.

En effet, les impuretés ont normalement une influence défavorable sur les qualités du produit principal recherché et leur présence, à des concentrations trop élevées, peut être gênante lors de l'attaque, et/ou encore entraîner des précipitations intempestives en divers points des circuits de fabrication.

Dans la littérature spécialisée en la matière, il est souvent indiqué que l'élimination partielle des impuretés présentes dans les liqueurs en circulation s'effectue en même temps que les stériles, sous forme de liqueur d'imprégnation de ces stériles lorsque ces derniers ne sont pas lavés ou insuffisamment lavés.

Le rejet dans la nature des stériles encore fortement alcalins, ou des liqueurs précédemment citées, est du plus en plus prohibé par les législations nationales, en raison des dégradations, irrémédiables que ces effluents peuvent provoquer dans le milieu naturel. Or, s'il apparaît souhaitable de mieux réaliser le lavage des stériles, pour améliorer la récupération des réactifs et du produit à valoriser, par contre la quantité d'impuretés présentes dans le circuit augmente simultanément. Dès lors, il devient nécessaire d'utiliser un procédé permettant d'extraire certains composés tels que le sulfate et les impuretés en quantité suffisante des liqueurs à traiter, pour éviter les inconvénients précités.

La demanderesse, poursuivant ses recherches, a mis au point un procédé de traitement des effluents alcalins liquides qui apporte une véritable solution aux nombreuses difficultés rencontrées jusqu'à ce jour, par l'homme de l'art.

Le nouveau procédé de traitement de solutions contenant des composés appartenant au groupe constitué par des carbonate, sulfate, hydroxyde ou hydrogénocarbonate de l'un des métaux alcalins, sodium ou potassium, ainsi que principalement l'un au moins des métaux appartenant au groupe constitué par le vanadium, l'uranium et le molybdène, sous la forme de sels de sodium ou de potassium, et des impuretés minérales et/ou organiques, consiste à traiter lesdites solutions à une température au plus égale à l'ébullition, par une quantité de chaux comprise entre 0,1 et 20 fois la quantité stoechiométrique nécessaire pour transformer en hydroxyde les carbonates présents sans tenir compte de la quantité de chaux nécessaire pour précipiter les composés métalliques de calcium insolubles, puis à effectuer la séparation et le lavage d'un premier précipité contenant pour l'essentiel du carbonate de calcium et un mélange d'autres sels organiques et inorganiques de calcium, et d'une liqueur qui s'est enrenchie en hydroxyde, à concentrer par évaporation le mélange de

ladite liqueur et de la liqueur de lavage du premier précipité jusqu'à une teneur en hydroxyde au plus égale à 50% pour provoquer l'obtention d'un deuxième précipité, essentiellement constitué du sulfate de sodium ou de potassium, à séparer les cristaux de ce deuxième précipité de leur liqueur-mère riche en hydroxyde et à récupérer ladite liqueur riche en hydroxyde.

les concentrations en $M_2SO_4$, $M_2CO_3$, MOH libre ou $MHCO_3$ en l'absence de MOH, où M représente l'un des métaux alcalins sodium ou potassium, ainsi que en composés soliques ou potassiques d'au moins un des métaux du groupe constitué par l'uranium, le vanadium et le molybdène ne sont pas critiques. Leurs teneurs relatives peuvent varier dans de larges proportions sans gêner la bonne marche du procédé selon l'invention.

La caustification des solutions s'effectue généralement par introduction d'une quantité de chaux au moins égale à la quantité stoechiométrique nécessaire pour la transformation quasi totale des carbonate et/ou hydrogénocarbonate présents dans la liqueur en hydroxyde, selon les réactions:

$$M_2CO_3+Ca(OH)_2 \rightarrow CaCO_3+2\ MOH$$

ou

$$MHCO_3+Ca(OH)_2 \rightarrow CaCO_3+MOH+H_2O$$

Dans le cas où les solutions à caustifier contiennent des sels métalliques susceptibles de former avec la chaux, et dans les conditions opératoires, un composé insoluble, la quantité totale de chaux introduite est constituée par la quantité de chaux effectivement nécessaire à la caustification des carbonates et/ou hydrogénocarbonates en solution et la quantité de chaux nécessaire pour précipiter lesdits éléments métalliques sous la forme de composés insolubles de calcium. Dès lors, et pour simplifier la compréhension de l'objet de l'invention, il ne sera fait mention que de la quantité de chaux effectivement nécessaire pour la seule caustification des carbonates de sodium ou potassium.

La température correspondante de traitement de caustification est au plus égale à la température d'ébullition de la liqueur traitée. Elle se situe donc entre 20°C et 100°C mais, de préférence, entre 50°C et 97°C, la précipitation et la filtration du résidu obtenu étant, dans la majorité des cas, améliorées quand la température de caustification est proche de la température d'ébullition.

Le premier précipité est constitué pour l'essentiel par du carbonate de calcium et par l'excès de chaux et, en quantité mineure, par des sels organiques et inorganiques de calcium.

La séparation du premier précipité et de la liqueur-mère alcaline s'effectue par un moyen connu tel que, par exemple, filtration, essorage, décantation, etc.

La liqueur-mère alcaline est alors soumise à une concentration par évaporation jusqu'à l'obtention d'une concentration en hydroxyde d'au plus 50% et telle que la teneur résiduelle en sulfate de la liqueur après évaporation, soit réglée à la valeur désirée. En effet, la demanderesse a constaté, lors de nombreuses vérifications, que la teneur résiduelle en sulfate de sodium ou de potassium, décroissait rapidement pour des concentrations croissantes en hydroxyde de sodium ou de potassium jusqu'à environ 25% et, au-delà de cette limite, décroissait plus lentement. On recueille alors un deuxième précipité constitué essentiellement par du sulfate de potassium ou de sodium qui est séparé de la liqueur-mère riche en hydroxyde par un moyen connu, puis lavé avec de l'eau ou avec une solution aqueuse saturée en sulfate de sodium ou de potassium, la liqueur de lavage étant recyclée à la concentration.

Comme la liqueur-mère récupérée, pratiquement débarrassée des carbonate, bicarbonate et sulfate de sodium ou de potassium. (C'est en ce sens que le procédé décrit jusqu'alors est déjà lui-même un procédé d'épuration). mais riche en hydroxyde, renferme encore des impuretés, il peut être souhaitable d'effectuer un traitement complémentaire de ladite liqueur en vue d'en extraire les éléments tels que le molybdène et d'éliminer les matières organiques et autres matières gênantes pour son utilisation ultérieure.

L'élimination du molybdène peut s'effectuer selon l'une ou l'autre des variantes suivantes par précipitation d'un composé sulfuré de ce métal.

Selon une première variante, le traitement d'élimination du molybdène consiste à acidifier la liqueur-mère récupérée, riche en hydroxyde et à effectuer l'introduction d'ions-sulfures en excès par rapport à la quantité stoechiométrique nécessaire.

Selon une deuxième variante, le traitement d'élimination du mobyldène s'effectue non pas sur la liqueur-mère riche en hydroxyde recueillie après caustification et élimination des ions-sulfates, mais sur les solutions de départ destinées à être caustifiées et contenant des carbonate, sulfate, hydroxyde ou hydrogénocarbonate de sodium ou potassium, ainsi que principalement l'un au moins des métaux appartenant au groupe constitué par le vanadium, l'uranium et le molybdène sous la forme de sels de sodium ou de potassium et des impuretés minérales et/ou organiques. Selon cette variante, le traitement d'élimination du molybdène consiste à acidifier une fraction des solutions destinées à être caustifiées, puis à effectuer l'introduction d'ions sulfures en excès par rapport à la quantité stoechiométrique nécessaire.

Les ions sulfures introduits pour assurer l'élimination du molybdène par précipitation d'un composé sulfuré de ce métal, sont en général des sulfures alcalins, tels que sulfures

de sodium, de potassium, d'ammonium ou encore de l'acide sulfhydrique.

Selon l'une ou l'autre des variantes, l'introduction des ions sulfures dans la liquer à traiter peut se faire avant, simultanément, ou encore après l'acidification.

Pour assurer l'élimination des matières organiques, la liqueur-mère récupérée, riche en hydroxyde, est traitée de manière connue:

— soit par un composé de baryum en mettant à profit la faible solubilité des organates de baryum dans le milieu alcalin. Le composé du baryum est introduit en quantité au moins égale à la quantité stoechiométrique nécessaire pour permettre la précipitation et l'élimination par séparation des organates de ce métal,
— soit par du bioxyde de sodium ou de potassium provoquant une dégradation "in situ" des matières organiques,
— soit par de l'eau oxygénée provoquant cette même dégradation,
— soit, enfin, par passage de ladite liqueur sur du charbon actif ayant la propriété bien connue de retenir les éléments organiques présents dans la liqueur-mère traitée.

De même, la liqueur-mère, riche en hydroxyde, provenant de la caustification et de l'élimination des ions sulfates, peut subir un traitement de transformation avant d'être utilisée dans le cycle de fabrication, tel que l'attaque du minerai. C'est ainsi que la liqueur-mère, riche en hydroxyde, eptu être partiellement ou en totalité carbonatée par sa mise en contact avec du gaz carbonique selon des moyens connus, par exemple par insufflation d'un large excès de ce gaz. Selon les conditions de cette opération, il est possible d'obtenir un précipité de carbonate de sodium ou de potassium que l'on peut ultérieurement séparer.

D'après les caractéristiques de la liqueur-mème alcaline, à la sortie de l'évaporation et les usages à laquelle cette liqueur purifiée est destinée, il est possible d'utiliser soit l'un ou l'autre des traitements d'élimination du molybdène, des matières organiques, ou de carbonatation, soit de les combiner partiellement ou totalement.

Selon une disposition complémentaire du procédé de l'invention, il peut se produire, lors du traitement des solutions par la chaux, une caustification incomplète du carbonate de sodium ou de potassium malgré l'introduction d'un large excès de chaux, ou bien il peut se révéler souhaitable d'effectuer une caustification ménagée de ce carbonate par l'introduction d'une quantité sous stoechiométrique de chaux. Dès lors, au cours de la concentration par évaporation de la liqueur-mère alcaline, il apparaît un précipité qui peut être constitué:

— quand la caustification concerne du carbonate de sodium, soit par le sel double $2Na_2SO_4 . Na_2CO_3$, soit par un mélange de carbonate de sodium et de ce sel double, soit, enfin, par un mélange de sulfate de sodium et de ce sel double, l'obtention de l'un ou l'autre des trois précipités possibles dépendant essentiellement de la composition de la liqueur alcaline après la caustification ainsi que du taux d'évaporation pratiqué;
— quand la caustification concerne du carbonate de potassium, par un mélange de carbonate de potassium et de sulfate de potassium, la composition de ce mélange dépendant essentiellement de la composition de la liqueur alcaline après la caustification ainsi que du taux d'évaporation pratiqué.

Dans le cas de cette caustification incomplète, la liqueur-mère riche en hydroxyde, obtenue par une séparation liquide-solide après évaporation, contient encore des impuretés qu'il est souhaitable d'éliminer, les plus gênantes étant le molybdène et les matières organiques dont l'élimination s'effectue par l'un ou l'autre des traitements complémentaires précités.

De même, la carbonatation de cette liqueur-mère riche en hydroxyde peut être réalisé comme cela a déjà été précisé.

L'invention sera mieux compris grâce à la description des schémas annexés.

La figure 1 est une représentation schématique du procédé selon l'invention, indiquant en traits pleins le circuit utilisé lorsque l'on désire éliminer les seuls composés carbonate de sodium ou de potassium et sulfate de sodium ou de potassium et, en traits pointillés, les circuits pour réaliser sur la liqueur-mère provenant de la caustification et riche en hydroxyde, soit une extraction du molybdène, soit une purification complémentaire des matières organiques, soit une carbonatation, en pratiquant le traitement complémentaire précité destiné à cet effet, soit en réalisant un traitement complet par la pratique successive des traitements complémentaires décrits précédemment.

Les figures 2, 3 et 4 sont des illustrations du traitement selon l'invention de solutions contenant les composés carbonate, sulfate, hydroxyde de sodium ou de potassium ainsi que le molybdène sous la forme d'un sel de sodium ou de potassium.

La figure 5 concerne le traitement selon l'invention de solutions comportant les composés carbonate, sulfate et hydroxyde de sodium ainsi que du molybdène qui est éliminé d'une fraction aliquote desdites solutions avant que celles-ci soient caustifiées.

Les solutions alcalines à traiter "Le" ainsi que la chaux nécessaire sont introduite en (A) par (Q) et (R). La bouillie obtenue après traitement par la chaux est introduite dans le réacteur (B) où l'on effectue la séparation d'un gâteau $S_1$ et d'une liqueur $L_1$ contenant certaines impuretés

solubilisées. Les eaux-mères du gâteau $S_1$ sont extraites en (C) au moyen d'une quantité d'eau introduite. Les eaux-mères $L_2$ ainsi extraites sont mélangées à la liqueur $L_1$ en formant la liqueur $L_3$. Le gâteau $S_2$ résultant, extrait de (C) est essentiellement constitué par du carbonate de calcium.

La liqueur $L_3$ constituée par le mélange des liqueurs $L_1$ et $L_2$ est conduite en (D) où s'effectue une concentration en soude libre par évaporation d'eau, en provoquant la précipitation d'un sulfate de sodium.

La bouillie $L_4$ sortant de la concentration est introduite en (E) où l'on réalise la séparation d'une liqueur $L_5$ et d'un gâteau $S_5$.

Le gâteau $S_5$, essentiellement constitué par du sulfate de sodium, est entraîné en (F) où il subit un rinçage, soit par de l'eau, soit par une solution saturée en sulfate de sodium, avec recyclage de la liqueur de rinçage $L_6$ en (D).

Le gâteau $S_6$ imprégné de la liqueur de rinçage peut être sorti du cycle de traitement par (K), ou bien être en partie introduit avec de l'eau en (G) où s'effectue la préparation de la solution de rinçage $L_7$ destinée à être utilisée en (F).

La liqueur $L_5$, riche en hydroxyde, provenant de (E) peut contenir en solution des impuretés telles que, par exemple, du molybdène, des sels organiques et inorganiques divers qu'il peut être souhaitable d'éliminer.

Si l'on désire éliminer le molybdène de cette liqueur $L_5$, celle-ci est introduite en (H) avec la quantité nécessaire de $Na_2S$ ou de $K_2S$ par exemple. La bouillie ainsi obtenue est introduite en (S) où s'effectue la séparation de la phase solide constituée par un composé sulfuré du molybdène qui est éliminé et de la phase $L_7$ qui peut être recueillie en (U) ou bien recyclée dans un autre stade du procédé tel que (I) ou (J).

Si l'on désire éliminer de la liqueur $L_5$ les matières organiques présentes, ladite liqueur est introduite en (I) avec, par exemple, une quantité adéquate d'un composé du baryum, provoquant la précipitation des organates de baryum. La bouillie provenant de (I) est alors introduite en (T) où l'on réalise la séparation d'un gâteau $S_8$ et d'une liqueur $L_8$ qui peut être recueillie en (V), ou encore, recyclée dans un autre stade du procédé tel que (J) par exemple.

De même, s'il est souhaitable de carbonater la liqueur $L_5$, riche en hydroxyde, cette liqueur est introduite en (J) pour y subir la carbonatation par insufflation de $CO_2$. La bouillie obtenue peut être utilisée telle que produite ou encore traitée en (M) pour séparer le gâteau $S_9$ constitué par du carbonate de sodium et une liqueur carbonatée $L_9$ qui peut être recueillie en (Ω) ou recyclée en (J) en vue de l'obtention d'un carbonate de sodium solide.

Mais, il est bien évident que la liqueur $L_5$, riche en hydroxyde, peut subir successivement deux des trois traitement précités selon les impuretés qu'il est souhaitable d'éliminer et selon les usages auxquels cette liqueur est destinée après purification. Par exemple, peuvent être combinées en série les éliminations du molybdène et des matières organiques: dans ce cas, une partie de la totalité de la liqueur $L_7$, provenant de l'épuration en molybdène (S) est introduite en (I) puis (T) pour y subir l'épuration en matières organiques. Inversement, l'épuration en matières organiques peut précéder l'épuration du molybdène. On peut également réaliser successivement l'élimination des matières organiques et une carbonatation de la liquer: dans ce cas, une partie ou la totalité de la liqueur $L_8$ provenant de (T), où s'est effectuée l'élimination des matières organiques, est introduite en (J) pour y subir la carbonatation souhaitée.

Le procédé selon l'invention est remarquable par sa souplesse d'adaptation. Celà est très important car, si la présence de sulfate de sodium ou de potassium dans les solutions à épurer est générale, ainsi d'ailleurs que celle du carbonate de sodium ou de potassium, les autres constituants présents peuvent varier qualitativement et quantitativement selon l'origine des solutions à traiter. Ainsi, le procédé se révèle particulièrement intéressant à l'égard de l'environnement, grâce à l'absence de rejets liquides dans la nature.

De plus, ce procédé présente d'autres avantages parmi lesquels on peut citer tout d'abord la possibilité de recycler une solution concentrée d'hydroxyde de sodium ou de potassium, ou encore une solution de carbonate de sodium ou de potassium, éventuellement une suspension de ce sel, voire même du carbonate de sodium ou de potassium à l'état solide, mais aussi de pouvoir régler à la demande la quantité de sulfate de sodium ou de potassium recyclée, qui doit être, en général, la plus faible possible, ainsi que les quantités de molybdène et/ou de vanadium, de même que les teneurs en impuretés telles que les matières organiques.

Les avantages du procédé selon l'invention seront beaucoup plus perceptibles grâce aux exemples donnés à titre illustratif.

Dans tous les exemples, la quantité de matières organiques présentes dans les liqueurs, est exprimée en masse d'oxygène consommée selon une méthode analytique dérivée de la méthode usuelle de la détermination de la D.B.O. Cette méthode consiste à laisser en contact un échantillon de la liqueur à doser, convenablement dilué et acidifié, pendant 4 heures, avec une solution N/100 de permanganate de potassium dont l'excès est dosé en retour par une solution de sulfates de fer et d'ammonium à 25 g/l.

Exemple 1 (illustré par la figure 2)

On a traité selon le procédé de l'invention une solution résiduelle contenant des carbonate, sulfate et hydroxyde de sodium, prélevée à la fin d'un cycle d'attaque d'un minerai uranifère, après la précipitation et la

séparation de l'uranate de sodium. La solution "Le" avait la composition suivante, en masses:

| | |
|---|---|
| NaOH | 11,7 kg |
| $Na_2CO_3$ | 28,7 kg |
| $Na_2SO_4$ | 22,7 kg |
| Uranium | 0,025 kg |
| Molybdène | 1,6 kg |
| $H_2O$ imprégnation, matières organiques et divers | 1.072,8 kg |
| dont matières organiques D.B.O. | 0,17 kg |

1.137,5 kg de cette solution ont été introduits en (A) avec 26,5 kg de chaux représentant un excès, en vue de réaliser la caustification quasi totale du carbonate présent, par chauffage et maintien à 95°C, pendant un temps de environ 3 heures.

La bouillie obtenue était alors transvasée en (B) où s'opérait la séparation des phases solide $S_1$ et liquide $L_1$.

Le gâteau $S_1$ était ensuite rincé en (C) par 17,1 kg d'eau. Les eaux-mères qui imprégnaient le gâteau $S_1$ étaient ainsi extraites et jointes à la liqueur $L_1$ provenant de la séparation (B).

Le gâteau $S_2$ qui avait une masse de 46,7 kg avait la composition suivante exprimée en masses:

| | |
|---|---|
| $CaCO_3$ | 26,9 kg |
| $CaSO_4$ | 4,0 kg |
| $Ca(OH)_2$ excès | 4,4 kg |
| Uranium | 0,004 kg |
| $H_2O$ imprégnation, matières organiques et divers | 11,4 kg |
| dont matières organiques D.B.O. | 0,1 kg |

La liqueur $L_3$ constituée par le mélange des liqueurs $L_1$ et $L_2$ représentait une masse de 1.134,3 kg et avait la composition suivante exprimée en masses:

| | |
|---|---|
| NaOH | 35,7 kg |
| $Na_2SO_4$ | 18,5 kg |
| Uranium | 0,021 kg |
| Molybdène | 1,6 kg |
| Eau+matières organiques et divers | 1.078,5 kg |
| dont matières organiques D.B.O. | 0,07 kg |

Elle était conduite en (D) où s'effectuait une concentration par évaporation de 1.010,5 kg d'eau.

La bouillie sortant de (D) était transvasée en (E) où s'effectuait la séparation d'un gâteau $S_5$ et d'une liqueur $L_5$.

Le gâteau $S_5$ était ensuite soumis à un rinçage en (F) par 12,5 kg d'eau en donnant un gâteau $S_6$. La liqueur de lavage $L_6$ était recyclée en (D) pour y subir la concentration.

Le gâteau $S_6$ représentait une masse de 24,4 kg et avait la composition suivante exprimée en masses:

| | |
|---|---|
| $Na_2SO_4$ | 18,2 kg |
| $H_2O$ (imprégnation) | 6,2 kg |

La liqueur $L_5$, provenant de la séparation (E) représentait une masse de 111,9 kg et avait la composition suivante exprimée en masses:

| | |
|---|---|
| NaOH | 35,7 kg |
| $Na_2SO_4$ | 0,3 kg |
| Uranium | 0,021 kg |
| Molybdène | 1,6 kg |
| $H_2O$+matières organiques et divers | 74,3 kg |
| dont matières organiques D.B.O. | 0,07 kg |

A la sortie de (E), la liqueur $L_5$ a été partagée en trois fractions $L_{51}$, $L_{52}$ et $L_{53}$.

La liqueur $L_{51}$ représentant une masse de 69,2 kg était directement recyclée à la précipitation (W) de l'uranate de sodium.

La liqueur $L_{52}$ représentant une masse de 31,5 kg était introduite en (J) pour y subir une carbonatation par absorption de 5,53 kg de $CO_2$. La liqueur $L_9$, sortant de la carbonatation (J) était, en réalité, une bouillie ayant la composition suivante exprimée en masses:

| | |
|---|---|
| $Na_2CO_3$ | 13,3 kg |
| $Na_2SO_4$ | 0,08 kg |
| Molybdène | 0,45 kg |
| Uranium | 0,006 kg |
| $H_2O$+matières organiques+divers | 23,1 kg |
| dont matières organiques par D.B.O. | 0,02 kg |

Cette bouillie $L_9$ était alors recyclée à l'attaque (X) du minerai uranifère.

La liqueur $L_{53}$ qui représentait une masse de 11,2 kg, était destinée à subir une épuration en molybdène. Pour cela, ladite liqueur était introduite en (Y) où elle subissait une acidification par introduction de 20,5 kg d'une solution de $H_2SO_4$ à 22%, puis était placée en (Z) où s'effectuait un traitement provoquant la précipitation de sulfure de molybdène, addition de 14,3 kg d'une solution aqueuse renfermant 9,1% de $Na_2 . S$, pendant une heure à une température voisine de 80°C. La bouillie sortant de (Z) était introduite en (S) pour y effectuer une séparation de la phase solide $S_7$ et de la phase liquide $L_7$.

La phase solide $S_7$, constituée essentiellement par le sulfure de molybdène était rincée en (P) par 0,5 kg d'eau, puis le solide $S_{10}$ était extrait de (P) et la liqueur $L_{10}$ était jointe à la liqueur $L_7$ pour former la liqueur $L_{11}$ qui était renvoyée avant la caustification (A).

La liqueur $L_{11}$ représentait une masse de 45,0 kg et renfermait seulement 0,002 kg de molybdène.

Exemple 2 (illustré par la figure 3)

On a traité, selon le procédé de l'invention, une solution sodique résiduelle prélevée à la fin d'un cycle d'attaque d'un minerai uranifère, après la précipitation et la séparation, de l'uranate de sodium. La solution "Le" avait la composition suivante exprimée en masses:

| | |
|---|---|
| NaOH | 11,7 kg |
| $Na_2CO_3$ | 45,0 kg |
| $Na_2SO_4$ | 28,0 kg |
| Uranium | 0,025 kg |
| Molybdène | 1,1 kg |
| $H_2O$+matières organiques+divers | 1,158,7 kg |
| dont matières organiques | 0,17 kg |

1.244,5 kg de cette solution ont été introduits en (A) avec 11,4 kg de chaux, très inférieure à la quantité stoechiométrique, en vue de réaliser une caustification partielle pendant un temps de 3 heures, vers 95°C.

La bouillie ainsi obtenue était ensuite transvasée en (B) où s'effectuait la séparation des phases solide $S_1$ et liquide $L_1$.

Le gâteau $S_1$ était ensuite rincé en (C) au moyen de 10,1 litres d'eau. Les eaux-mères qui imprégnaient le gâteau $S_1$ étaient ainsi extraites et jointes à la liqueur $L_1$ provenant de la séparation (B) pour former la liqueur $L_3$.

Le gâteau $S_2$ avait, après rinçage une masse de 22,1 kg et la composition suivante exprimée en masses:

| | |
|---|---|
| $CaCO_3$ | 15,3 kg |
| $H_2O$+matières organiques+divers | 6,8 kg |
| dont matières organiques | 0,1 kg |

La liqueur $L_3$, formée par le mélange des liqueurs $L_1$ et $L_2$, représentait une masse totale de 1.243,8 kg et avait la composition suivante exprimée en masses:

| | |
|---|---|
| NaOH | 24,0 kg |
| $Na_2CO_3$ | 28,7 kg |
| Uranium | 0,025 kg |
| $Na_2SO_4$ | 28,0 kg |
| Molybdène | 1,1 kg |
| $H_2O$+matières organiques+divers | 1.162,0 kg |
| dont matières organiques | 0,07 kg |

Cette liquer était introduite en (D) où s'effectuait une concentration par évaporation de 1.023,8 kg d'eau.

La bouillie sortant de (D) était transvasée en (E) où elle subissait une séparation en un gâteau $S_5$ et une liqueur $L_5$.

Le gâteau $S_5$ était rincé en (F) par 15,6 kg d'eau et la liqueur de lavage $L_6$ était recyclée en (D), pour y subir une concentration.

Le gâteau $S_6$, obtenu par lavage de $S_5$, était constitué par 30,2 kg d'un sel double ayant pour formule:

$2Na_2SO_4,Na_2CO_3$, imprégnée de 10,4 kg d'eau.

La liqueur $L_5$ provenant de (E) représentait une masse de 195 kg et avait la composition suivante exprimée en masses:

| | |
|---|---|
| NaOH | 24,0 kg |
| $Na_2CO_3$ | 20,5 kg |
| $Na_2SO_4$ | 6,0 kg |
| Uranium | 0,025 kg |
| Molybdène | 1,1 kg |
| Eau+matières organiques+divers | 143,4 kg |
| dont matières organiques | 0,07 kg |

A la sortie de (E) la liqueur $L_5$ était fractionnée en $L_{51}$ et $L_{53}$.

La liqueur $L_{51}$, représentant une masse de 175,5 kg était recyclée à la précipitation de l'uranate de sodium.

La liqueur $L_{53}$, représentant une masse de 19,5 kg, était destinée à subir une épuration en molybdène. Cette liqueur était alors introduite en (Y) où elle subissait une acidification par introduction de 22,1 kg de solution à 22% de $H_2SO_4$ puis était placée en (Z) où se réalisait un traitement par addition de 9,9 kg de solution à 9,1% de $Na_2S$ à 80°C et pendant une heure, provoquant la précipitation de sulfure de molybdène. La bouillie sortant de (Z) était introduite en (S) où l'on effectuait la séparation de la phase solide $S_7$ et de la phase liquide $L_7$.

La phase solide $S_7$ était rincée en (P) par 0,5 kg d'eau, puis le solide $S_{10}$ en était extrait ainsi que la liqueur $L_{10}$ qui, jointe à la laiqueur $L_7$ formait la liqueur $L_{11}$ renvoyée avant la caustification (A).

La liqueur $L_{11}$ représentait une masse de 51 kg renfermant seulement 0,002 kg de molybdène.

Exemple 3 (illustré par la figure 4)

On a traité, selon le procédé de l'invention, une solution riche en KOH résiduelle, prélevée à la fin d'un cycle d'attaque d'un minerai uranifère, après la précipitation et la séparation de l'uranate de sodium. La solution "Le" avait la composition suivant en masses:

| | |
|---|---|
| KOH | 22,2 kg |
| $K_2CO_3$ | 46,8 kg |
| $K_2SO_4$ | 36,7 kg |
| Uranium | 0,030 kg |
| Molybdène | 2,1 kg |
| $H_2O$+matières organiques et divers | 1.319,5 kg |
| dont matières organiques D.B.O. | 0,21 kg |

1.427,3 kg de cette solution ont été introduits en (A) avec 32,7 kg de chaux représentant un excès, en vue de réaliser la caustification quasi totale du carbonate présent, par chauffage et maintien à 95°C pendant un temps d'environ 3 heures.

La bouillie ainsi obtenue était alors transvasée en (B) où s'opérait la séparation des phases solide $S_1$ et liquide $L_1$.

Le gâteau $S_1$ était ensuite rincé en (C) par 20 kg d'eau. Les eaux-mères qui imprégnaient le gâteau $S_1$ étaient ainsi extraites et jointes à la liqueur $L_1$ provenant de la séparation (B).

Le gâteau $S_2$, qui avait une masse de 53,5 kg, avait la composition suivante exprimée en masses:

| | |
|---|---|
| Uranium | 0,005 kg |
| $CaCO_3$ | 33,9 kg |
| $Ca(OH)_2$ excès | 5,0 kg |
| $H_2O$ imprégnation, matières organiques et divers | 14,6 kg |
| dont matières organiques D.B.O. | 0,12 kg |

La liqueur $L_3$ constituée par le mélange des liqueurs $L_1$ et $L_2$ représentait une masse de 1.426,5 kg et avait la composition suivante exprimée en masses:

| | |
|---|---|
| KOH | 60,2 kg |
| $K_2SO_4$ | 36,7 kg |
| Uranium | 0,025 kg |
| Molybdène | 2,1 kg |
| Eau+matières organiques et divers | 1.327,5 kg |
| dont matières organiques D.B.O. | 0,09 kg |

Elle était conduite en (D) où s'effectuait une concentration par évaporation de 1.027,5 kg d'eau.

La bouillie sortant de (D) était transvasée en (E) où s'effectuait la séparation d'un gâteau $S_5$ et d'une liqueur $L_5$.

Le gâteau $S_5$ était ensuite soumis à un rinçage en (F) par 15 kg d'eau en donnant un gâteau $S_6$. La liqueur de lavage $L_6$ était recyclée en (D) pour y subir la concentration.

Le gâteau $S_6$ représentait une masse de 39,9 kg et avait la composition suivante exprimée en masses:

| | |
|---|---|
| $K_2SO_4$ | 29,7 kg |
| $H_2O$ (imprégnation) | 10,2 kg |

La liqueur $L_5$ provenant de la séparation (E) représentait une masse de 374,1 kg et avait la composition suivante exprimée en masses:

| | |
|---|---|
| KOH | 60,2 kg |
| $K_2SO_4$ | 7,0 kg |
| Uranium | 0,025 kg |
| Molybdène | 2,1 kg |
| $H_2O$+matières organiques+divers | 304,8 kg |
| dont matières organiques | 0,09 kg |

A la sortie de (E), la liqueur $L_5$ a été partagée en trois fractions $L_{51}$, $L_{52}$ et $L_{53}$.

La liqueur $L_{51}$ représentant une masse de 231,9 kg était directement recyclée à la précipitation (W) de l'uranate de sodium.

La liqueur $L_{52}$ représentant une masse de 105,3 kg était introduite en (J) pour y subir une carbonatation par absorption de 6,7 kg de $CO_2$. La liqueur $L_9$, sortant de la carbonatation (E) était, en réalité, une bouillie ayant la composition suivante exprimée en masses:

| | |
|---|---|
| $K_2CO_3$ | 20,88 kg |
| $K_2SO_4$ | 1,97 kg |
| Molybdène | 0,59 kg |
| Uranium | 0,007 kg |
| $H_2O$+matières organiques+divers | 88,52 kg |
| dont matières organiques D.B.O. | 0,025 kg |

Cette bouillie $L_9$ était alors recyclée à l'attaque (X) du minerai uranifère.

La liqueur $L_{53}$, qui représentait une masse de 36,90 kg, était destinée à subir une épuration en molybdène. Pour cela, ladite liqueur était introduite en (Y) où elle subissait une acidification par introduction de 20,25 kg d'une solution de $H_2SO_4$ à 25%, puis était placée en (Z) où s'effectuait un traitement provoquant la précipitation de sulfure de molybdène par addition de 10,86 kg d'une solution aqueuse renfermant 0,76 kg de $Na_2S$, pendant une heure à une température de 80°C. La bouillie sortant de (Z) était introduite en (S) pour y effectuer une séparation de la phase solide $S_7$ et de la phase liquide $L_7$.

La phase solide $S_7$, constituée essentiellement par le sulfure de molybdène était rincée en (P) par 0,5 kg d'eau, puis le solide $S_{10}$ était extrait de (P) et la liqueur $L_{10}$ était jointe à la liqueur $L_7$ pour former la liqueur $L_{11}$ qui était renvoyée vers la caustification (A).

La liqueur $L_{11}$ représentait une masse de 66,70 kg et renfermait seulement 0,003 kg de molybdène.

Exemple 4 (illustré par la figure 5)

On a traité, selon le procédé de l'invention, une solution riche en NaOH résiduelle, prélevée à la fin d'un cycle d'attaque d'un minerai uranifère, après la précipitation et la séparation de l'uranate de sodium. La solution "Le" représentant 845 kg avait la composition suivanten masses:

| | |
|---|---|
| NaOH | 8,99 kg |
| $Na_2CO_3$ | 30,16 kg |
| $Na_2SO_4$ | 27,01 kg |
| Uranium | 0,0146 kg |
| Molybdène | 3,54 kg |
| $H_2O$+matières organiques et divers | 775,3 kg |
| dont matières organiques D.B.O. | 0,169 kg |

Le traitement d'élimination du molybdène a été effectué sur la fraction "$Le_1$" de la solution "Le" initiale, tandis que la fraction "$Le_2$" était destinée à subir la caustification.

La solution "$Le_1$", représentant une masse de 33,7 kg et provenant de la solution "Le" non encore caustifiée, a été introduite en (Y) où elle subissait une acidification par addition de 3,8 kg d'une solution à 50% de $H_2SO_4$, puis était placée en (Z) où se réalisait un traitement par addition de 5,10 kg d'une solution à 8,8% de $Na_2S$ à 80°C et pendant une heure, provoquant la précipitation de sulfure de molybdène. La bouillie sortant de (Z) était introduite en (S) où l'on effectuait la séparation de la phase solide $S_7$ et de la phase liquide $L_7$.

La phase solide $S_7$ était rincée en (P) par 0,5

kg d'eau, puis le solide $S_{10}$ en était extrait ainsi que la liqueur $L_{10}$ qui, jointe à la liqueur $L_7$, formait la liqueur $L_{17}$ renvoyée après la caustification (A).

La liqueur $L_{17}$ représentait une masse de 41,10 kg et avait la composition suivante exprimée en masses:

| | |
|---|---|
| $Na_2SO_4$ | 3,70 kg |
| Uranium | 0,0006 kg |
| Molybdène | 0,014 kg |
| Eau+matières organiques+divers | 37,39 kg |
| dont matières organiques D.B.O. | 0,007 kg |

La liqueur $L_{17}$ renfermait seulement 0,014 kg de molybdène après ce traitement.

La solution "$Le_2$", représentant une masse de 811,3 kg, et provenant de la solution "Le" non encore caustifiée, a été introduite en (A) avec, 27,3 kg de chaux, en vue de réaliser le caustification du carbonate présent par chauffage et maintien à 95°C pendant un temps de, environ, trois heures.

La bouillie obtenue était alors transvasée en (B) où s'opérait la séparation des phases solide $S_1$ et liquide $L_1$.

Le gâteau $S_1$ était ensuite lavé en (C) par 18,1 kg d'eau. Les eaux-mères qui imprégnaient le gâteau $S_1$ étaient ainsi extraites et jointes à la liqueur $L_1$ provenant de la séparation (B).

Les liqueurs $L_1$ et $L_2$ formaient la liqueur $L_{21}$ à laquelle était jointe la liqueur $L_{17}$ provenant du traitement d'élimination du molybdène.

Le gâteau $S_2$, sortant de (C), avait une masse de 41,8 kg et avait la composition suivante exprimée en masses:

| | |
|---|---|
| $CaCO_3$ | 27,32 kg |
| $Ca(OH)_2$ excès | 4,85 kg |
| Uranium | 0,001 kg |
| $H_2O$ d'imprégnation+matières organiques et divers | 9,63 kg |
| dont matières organiques D.B.O. | 0,10 kg |

La liqueur $L_3$ constituée par le mélange des liqueurs $L_{21}$ et $L_{17}$ précitées représentait une masse de 856,0 kg et avait la composition suivante exprimée en masses:

| | |
|---|---|
| NaOH | 30,49 kg |
| $Na_2SO_4$ | 29,63 kg |
| Uranium | 0,013 kg |
| Molybdène | 3,414 kg |
| Eau+matières organiques+divers | 792,49 kg |
| dont matières organiques D.B.O. | 0,069 kg |

Elle était conduite en (D) où s'effectuait une concentration par évaporation de 710 kg d'eau.

La bouillie sortant de (D) était transvasée en (E) où s'effectuait la séparation d'un gâteau $S_5$ et d'une liqueur $L_5$.

Le gâteau $S_5$ était ensuite soumis à un lavage en (F) par 6,2 kg d'eau en donnant un gâteau $S_6$. La liqueur de lavage $L_6$ était recyclée en (D) pour y subir la concentration.

Le gâteau $S_6$ représentait une masse de 30,3 kg et avait la composition suivante exprimée en masses:

| | |
|---|---|
| $Na_2SO_4$ | 27,8 kg |
| $H_2O$ et divers | 2,5 kg |

La liqueur $L_5$ provenant de la séparation (E) représentait une masse de 121,9 kg et avait la composition suivante exprimée en masses:

| | |
|---|---|
| NaOH | 30,49 kg |
| $Na_2SO_4$ | 1,83 kg |
| Uranium | 0,013 kg |
| Molybdène | 3,414 kg |
| $H_2O$+matières organiques+divers | 86,153 kg |
| dont matières organiques D.B.O. | 0,069 kg |

A la sortie de (E) la liqueur $L_5$ a été partagée en deux fractions $L_{51}$ et $L_{52}$.

La liqueur $L_{51}$, représentant une masse de 79,4 kg, était directement recyclée à la précipitation (W) de l'uranate de sodium.

La liqueur $L_{52}$, représentant une masse de 42,50 kg était introduite en (J) pour y subir une carbonatation par absorption de 5,85 kg de $CO_2$.

La liqueur $L_9$, sortant de carbonatation (E), était une réalité une bouillie représentant une masse de 48,35 kg et ayant la composition suivante exprimée en masses:

| | |
|---|---|
| $Na_2CO_3$ | 14,1 kg |
| $Na_2SO_4$ | 0,64 kg |
| Uranium | 0,005 kg |
| Molybdène | 1,194 kg |
| $H_2O$+matières organiques+divers | 32,41 kg |
| dont matières organiques D.B.O. | 0,029 kg |

Cette bouillie $L_9$ était alors recyclée à l'attaque (X) du minerai uranifère.

Exemple 5 (illustré par la figure 5)

On a traité, selon le procédé de l'invention, une solution plus riche en NaOH résiduelle que celle traitée dans l'exemple 4, qui a été prélevée à la fin d'un cycle d'attaque d'un minerai uranifère, après la précipitation et la séparation de l'uranate de sodium. La solution "Le", représentant 724,4 kg, avait la composition suivante en masses:

| | |
|---|---|
| NaOH | 29,1 kg |
| $Na_2CO_3$ | 76,85 kg |
| $Na_2SO_4$ | 32,4 kg |
| Uranium | 0,015 kg |
| Molybdène | 9,02 kg |
| $H_2O$+matières organiques+divers | 577,02 kg |
| dont matières organiques D.B.O. | 0,233 kg |

Le traitement d'élimination du molybdène a été effectué sur la fraction aliquote "$Le_1$" de la solution "Le" initiale, tandis que la fraction "$Le_2$" était destinée à subir la caustification.

La solution "$Le_1$", représentant une masse d'environ 8,70 kg et provenant de la solution "Le" non encore caustifiée, a été introduite en (Y) où elle subissait une acidification par addition de 2,56 kg d'une solution à 50% de $H_2SO_4$, puis était placée en (Z) où se réalisait un traitement par addition de 3,88 kg d'une solution à 8,5% de $Na_2S$ à 80°C et pendant une heure provoquant la précipitation de sulfure de molybdène. La bouillie sortant de (Z) était introduite en (S) où l'on effectuait la séparation de la phase solide $S_7$ et de la phase liquide $L_7$.

La phase solide $S_7$ était rincée en (P) par 0,6 kg d'eau, puis le solide $S_{10}$ en était extrait ainsi que la liqueur $L_{10}$ qui, jointe à la liqueur $L_7$, formait la liqueur $L_{17}$ renvoyée après la caustification (A).

La liqueur $L_{17}$ représentait une masse de 14,76 kg et avait la composition suivante exprimée en masses:

| | |
|---|---|
| $Na_2SO_4$ | 2,43 kg |
| Uranium | 0,0 kg |
| Molybdène | 0,014 kg |
| Eau+matières organiques+divers | 12,316 kg |
| dont matières organiques D.B.O. | 0,003 kg |

La liqueur $L_{17}$ renfermait seulement 0,014 kg de molybdène après ce traitement.

La solution "$Le_2$", représentant une masse de 715,7 kg et provenant de la solution "Le" non encore caustifiée, a été introduite en (A) avec 63,61 kg de chaux, en vue de réaliser la caustification du carbonate présent par chauffage et maintien à 95°C pendant un temps de environ trois heures.

La bouillie obtenue était alors transvasée en (B) où s'opérait la séparation des phases solide $S_1$ et liquide $L_1$.

Le gâteau $S_1$ était ensuite lavé en (C) par 47 kg d'eau. Les eauxmères qui imprégnaient le gâteau $S_1$ étaient ainsi extraites et jointes à la liqueur $L_1$ provenant de la séparation (B).

Les liqueurs $L_1$ et $L_2$ formaient la liqueur $L_{21}$ à laquelle était jointe la liqueur $L_{17}$ provenant du traitement d'élimination du molybdène.

Le gâteau, ($S_2$) sortant de (C), avait une masse de 100,52 kg et avait la composition suivante exprimée en masses:

| | |
|---|---|
| $CaCO_3$ | 64,43 kg |
| $Ca(OH)_2$ excès | 10,84 kg |
| Uranium | 0,004 kg |
| $H_2O$ imprégnation+matières organiques+divers | 25,25 kg |
| dont matières organiques D.B.O. | 0,14 kg |

La liqueur $L_3$ constituée par le mélange des liqueurs $L_{21}$ et $L_{17}$ précitées réprésentait une masse de 740,55 kg et avait la composition suivante exprimée en masses:

| | |
|---|---|
| NaOH | 80,3 kg |
| $Na_2CO_3$ | 7,63 kg |
| $Na_2SO_4$ | 34,44 kg |
| Uranium | 0,011 kg |
| Molybdène | 8,926 kg |
| Eau+matières organiques+divers | 609,246 kg |
| dont matières organiques D.B.O. | 0,093 kg |

Elle était conduite en (D) où s'effectuait une concentration par évaporation de 394,55 kg d'eau.

La bouillie, sortant de (D), était transvasée en (E) où s'effectuait la séparation d'un gâteau $S_5$ et d'une liqueur $L_5$.

Le gâteau $S_5$ était ensuite soumis à un lavage en (F) par 6,6 kg d'eau en donnant un gâteau $S_6$. La liqueur de lavage $L_6$ était recyclée en (D) pour y subir la concentration.

Le gâteau $S_6$ représentait une masse de 33,8 kg et avait la composition suivante exprimée en masses:

| | |
|---|---|
| $Na_2CO_3$ | 1,25 kg |
| $Na_2SO_4$ | 29,66 kg |
| $H_2O$ et divers | 2,89 kg |

La liqueur $L_5$, provenant de la séparation (E), représentait une masse de 318,8 kg et avait la composition suivante exprimée en masses:

| | |
|---|---|
| NaOH | 80,3 kg |
| $Na_2CO_3$ | 6,38 kg |
| $Na_2SO_4$ | 4,78 kg |
| Uranium | 0,011 kg |
| Molybdène | 8,926 kg |
| $H_2O$+matières organiques+divers | 218,403 kg |
| dont matières organiques D.B.O. | 0,093 kg |

A la sortie de (E), la liqueur $L_5$ a été partagée en deux fractions $L_{51}$ et $L_{52}$.

La liqueur $L_{51}$, représentant une masse de 205,7 kg, était directement recyclée a la précipitation (W) de l'uranate de sodium.

La liqueur $L_{52}$, représentant une masse de 113,1 kg, était introduite en (J) pour y subir une carbonatation par absorption de 15,67 kg de $CO_2$.

La liqueur $L_9$ sortant de carbonatation (E) était, une réalité, une bouillie représentant une masse de 128,77 kg ayant la composition suivante exprimée en masses:

| | |
|---|---|
| $Na_2CO_3$ | 40,01 kg |
| $Na_2SO_4$ | 1,70 kg |
| Uranium | 0,004 kg |
| Molybdène | 3,166 kg |
| $H_2O$+matières organiques+divers | 83,89 kg |
| dont matières organiques D.B.O. | 0,033 kg |

Cette bouillie $L_9$ était alors recyclée à l'attaque (X) du minerai uranifère.

## Revendications

1. Procédé de traitement de solutions aqueuses contenant des composés appartenant au groupe constitué par des carbonate, sulfate, hydroxyde ou hydrogénocarbonate de l'un des métaux alcalins sodium ou potassium, ainsi que principalement l'un au moins des métaux appartenant au groupe constitué par le vanadium, l'uranium et le molybdène, sous la forme de sels de sodium ou de potassium et d'impuretés minérales et/ou organiques, caractérisé en ce que l'on traite lesdites solutions à une température au plus égale à l'ebullition, par une quantité de chaux comprise entre 0,1 et 20 fois la quantité stoechiométrique nécessaire pour transformer en hydroxyde les carbonates présents sans tenir compte de la quantité de chaux nécessaire pour précipiter les composés de calcium insolubles, puis on effectue la séparation et le lavage d'un premier précipité contenant pour l'essentiel du carbonate de calcium et un mélange d'autres sels organiques et inorganiques de calcium, et d'une liqueur qui s'est enrichie en hydroxyde, en ce que l'on concentre par évaporation le mélange de ladite liqueur et de la liqueur de lavage du premier précipité jusqu'à une teneur en hydroxyde au plus égale à 50% pour provoquer l'obtention d'un deuxième précipité essentiellement constitué de sulfate de sodium ou de potassium, en ce que l'on sépare les cristaux de ce deuxième précipité de leur liqueur-mère riche en hydroxyde et en ce que l'on récupère ladite liqueur riche en hydroxyde.

2. Procédé de traitement de solutions selon la revendication 1, caractérisé en ce que l'on lave le deuxième précipité et recycle la liqueur de lavage à la concentration.

3. Procédé de traitement de solutions selon la revendication 2, caractérisé en ce que le lavage du deuxième précipité est effectué par introduction d'eau.

4. Procédé de traitement de solutions selon la revendication 2, caractérisé en ce que le lavage du deuxième précipité est effectué par une solution aqueuse obtenue par dissolution d'une fraction du deuxième précipité jusqu'à saturation.

5. Procédé de traitement de solutions selon la revendication 1, caractérisé en ce que l'on effectue la caustification des solutions par l'introduction d'une quantité de chaux au moins égale à la quantité stoechiométrique nécessaire pour la transformation quasi totale en hydroxyde du carbonate présent dans la liqueur.

6. Procédé de traitement de solutions selon la revendication 1, caractérisé en ce que l'on effectue une caustification ménagée des solutions par introduction d'une quantité insuffisante de chaux.

7. Procédé de traitement de solutions selon la revendication 1, caractérisé en ce que l'on traite une partie de la liqueur-mère riche en hydroxyde, séparée du deuxième précipité, par acidification et introduction d'un sulfure alcalin ou d'acide sulfhydrique pour provoquer la précipitation du molybdène.

8. Procédé de traitement de solutions selon la revendication 1, caractérisé en ce que l'on prélève une partie desdites solutions avant leur caustification par la chaux, puis traite ladite partie par acidification et introduction d'un sulfure alcalin ou d'acide sulfhydrique pour provoquer la précipitation du molybdène.

9. Procédé de traitement de solutions selon les revendications 7 ou 8, caractérisé en ce que le sulfure ou l'acide sulfhydrique est introduit avant, en même temps ou après que s'effectue l'acidification.

10. Procédé de traitement de solutions selon la revendication 1, caractérisé en ce que l'on traite une fraction de la liqueur-mère riche en hydroxyde, séparée du deuxième précipité, par introduction d'un composé de baryum en quantité au moins égale à la quantité stoechiométrique, pour provoquer la précipitation d'organates de baryum.

11. Procédé de traitement de solutions selon la revendication 1, caractérisé en ce que l'on traite une fraction de la liqueur-mère riche en hydroxyde, séparée du deuxième précipité, par l'un des moyens constitués par le bioxyde de sodium et l'eau oxygénée en provoquant une dégradation "in situ" des matières organiques.

12. Procédé de traitement de solutions selon la revendication 1, caractérisé en ce que l'on traite une fraction de la liqueur-mère riche en hydroxyde, séparée du deuxième précipité, par passage de ladite liqueur sur charbon actif.

13. Procédé de traitement de solutions selon la revendication 1, caractérisé en ce que l'on traite une fraction de la liqueur-mère riche en hydroxyde, séparée du deuxième précipité, par insufflation de gaz carbonique en vue de carbonater partiellement ou totalement ladite liqueur.

14. Procédé de traitement de solution selon la revendication 13, caractérisé en ce que la carbonatation est réglée en vue d'obtenir une suspension de carbonate de sodium ou de potassium dont on extrait, par séparation physique, le carbonate à l'état solide, et recycle la liqueur séparée à la carbonation.

15. Procédé de traitement de solutions selon les revendications 7 et 8, ou 7 et 11, ou 7 et 12, caractérisé en ce que l'on traite la liqueur-mère riche en hydroxyde, séparée du deuxième précipité, en vue d'éliminer le molybdène et les matières organiques, par combinaison de deux moyens.

16. Procédé de traitement de solution selon les revendications 10, 11, 12, 13 et 14, caractérisé en ce que l'on traite la liqueur-mère riche en hydroxyde, séparée du deuxième précipité, par la combinaison de l'un des moyens revendiqués en 10, 11 ou 12 avec l'un des moyens revendiqués en 13 ou 14.

**Patentansprüche**

1. Verfahren zur Behandlung von wässerigen Lösungen, die zu der aus Karbonat, Sulfat, Hydroxid oder Hydrogenkarbonat eines der Alkalimetalle Natrium oder Kalium gebildeten Gruppe gehörende Verbindungen sowie hauptsächlich wenigstens eines der zu der aus Vanadin, Uran und Molybdän gebildeten Gruppe gehörenden Metalle in Form von Natrium- oder Kaliumsalzen und mineralische und/oder organische Verunreinigungen enthalten, dadurch gekennzeichnet, daß man die Lösungen bei einer höchstens dem Siedepunkt gleichen Temperatur mit einer Kalkmenge behandelt, die im Bereich vom 0,1- bis 20-fachen der stöchiometrischen Menge liegt, die ohne Berücksichtigung der zu Ausfällung der metallischen unlöslichen Kalziumverbindungen erforderlichen Kalkmenge nötig ist, um die vorhandenen Karbonate in Hydroxid umzuwandeln, daß man die Trennung und das Waschen eines ersten Niederschlags, der im wesentlichen Kalziumkarbonat und ein Gemisch von anderen, organischen und anorganischen Kalziumsalzen enthält, und einer Flüssigkeit vornimmt, die sich an Hydroxid angereichert hat, daß man durch Verdampfen das Gemisch dieser Flüssigkeit und der Waschflüssigkeit des ersten Niederschalgs bis zu einem Hydroxidgehalt von höchstens 50% konzentriert, um das Erhalten eines im wesentlichen aus Natrium- oder Kaliumsulfat bestehenden zweiten Niederschlags zu bewirken, daß man die Kristalle dieses zweiten Niederschlags von ihrer an Hydroxid reichen Mutterlauge trennt und daß man diese an Hydroxid reiche Flüssigkeit wiedergewinnt.

2. Verfahren zur Behandlung von Lösungen nach Anspruch 1, dadurch gekennzeichnet, daß man den zweiten Niederschlag wäscht und die Waschflüssigkeit zur Konzentrierung rückführt.

3. Verfahren zur Behandlung von Lösungen nach Anspruch 2, dadurch gekennzeichnet, daß das Waschen des zweiten Niederschlags durch Einführung von Wasser erfolgt.

4. Verfahren zur Behandlung von Lösungen nach Anspruch 2, dadurch gekennzeichnet, daß das Waschen des zweiten Niederschlags durch eine wässerige Lösung erfolgt, die durch Auflösen eines Teils des zweiten Niederschlags bis zur Sättigung erhalten wurde.

5. Verfahren zur Behandlung von Lösungen nach Anspruch 1, dadurch gekennzeichnet, daß man das Kaustifizieren der Lösungen durch Einführung einer Kalkmenge vornimmt, die wenigstens gleich der stöchiometrischen Menge ist, die zur etwa totalen Umwandlung des in der Flüssigkeit vorhandenen Karbonats in Hydroxid erforderlich ist.

6. Verfahren zur Behandlung von Lösungen nach Anspruch 1, dadurch gekennzeichnet, daß man ein beschränktes Kausitifizieren der Lösungen durch Einführung einer unzureichenden Kalkmenge vornimmt.

7. Verfahren zur Behandlung von Lösungen nach Anspruch 1, dadurch gekennzeichnet, daß man einen Teil der vom zweiten Niederschlag abgetrennten, an Hydroxid reichen Mutterlauge durch Ansäuerung und Einführung eines Alkalisulfids oder von Schwefelwasserstoffsäure behandelt, um die Ausfällung des Molybdäns zu bewirken.

8. Verfahren zur Behandlung von Lösungen nach Anspruch 1, dadurch gekennzeichnet, daß man einen Teil der Lösungen vor ihrem Kaustifizieren mit dem Kalk entnimmt und dann diesen Teil durch Ansäuerung und Einführung eines Alkalisulfids oder von Schwefelwasserstoffsäure behandelt, um die Ausfällung des Molybdäns zu bewirken.

9. Verfahren zur Behandlung von Lösung nach den Ansprüchen 7 oder 8, dadurch gekennzeichnet, daß das Sulfid oder die Schwefelwasserstoffsäure vor, gleichzeitig mit der oder nach der Vornahme der Ansäuerung eingeführt wird.

10. Verfahren zur Behandlung von Lösungen nach Anspruch 1, dadurch gekennzeichnet, daß man eine Fraktion der vom zweiten Niederschlag abgetrennten, an Hydroxid reichen Mutterlauge durch Einführung einer Bariumverbindung in einer Menge behandelt, die mindestens gleich der stöchiometrischen Menge ist, um die Ausfällung von Bariumorganaten zu bewirken.

11. Verfahren zur Behandlung von Lösungen nach Anspruch 1, dadurch gekennzeichnet, daß man eine Fraktion der vom zweiten Niederschlag abgetrennten, an Hydroxid reichen Mutterlauge durch ein Mittel der Gruppe Natriumperoxid und sauerstoffangereichertes Wasser unter Hervorrufung einer Zersetzung der organischen Stoffe "in situ" behandelt.

12. Verfahren zur Behandlung von Lösungen nach Anspruch 1, dadurch gekennzeichnet, daß man eine Fraktion der vom zweiten Niederschlag abgetrennten, an Hydroxid reichen Mutterlauge durch Leiten dieser Flüssigkeit über Aktivkohle behandelt.

13. Verfahren zur Behandlung von Lösungen nach Anspruch 1, dadurch gekennzeichnet, daß man eine Fraktion der vom zweiten Niederschlag abgetrennten, an Hydroxid reichen Mutterlauge durch Einblasen von Kohlendioxid zwecks teilweise oder völliger Karbonatisierung dieser Flüssigkeit behandelt.

14. Verfahren zur Behandlung von Lösungen nach Anspruch 13, dadurch gekennzeichnet, daß die Karbonatisierung geregelt wird, um eine Suspension von Natrium-oder Kaliumkarbonat zu erhalten, aus der man durch physikalische Trennung des Karbonat im festen Zustand abtrennt und die abgetrennte Flüssigkeit zur Karbonatisierung rückführt.

15. Verfahren zur Behandlung von Lösungen nach den Ansprüchen 7 und 8 oder 7 und 11 oder 7 und 12, dadurch gekennzeichnet, daß man die vom zweiten Niederschlag abgetrennte, an Hydroxid reiche Mutterlauge zur Beseitigung

des Molybdäns und der organischen Stoffe durch Kombination zweier Mittel behandelt.

16. Verfahren zur Behandlung von Lösungen nach den Ansprüchen 10, 11, 12, 13 und 14, dadurch gekennzeichnet, daß man die vom zweiten Niederschlag abgetrennte, an Hydroxid reiche Mutterlauge durch die Kombination eines der in den Ansprüchen 10, 11 oder 12 beanspruchten Mittel mit einem der in den Ansprüchen 13 oder 14 beanspruchten Mittel behandelt.

## Claims

1. A process for treating aqueous solutions containing compounds belonging to the group formed by carbonate, sulphate, hydroxide or hydrogen carbonate of one of the alkali metals sodium or potassium, and mainly one at least of the metals belonging to the group formed by vanadium, uranium and molybdenum, in the form of sodium or potassium salts, and inorganic and/or organic impurities, characterised in that said solutions are treated at a temperature which is at most equal to boiling temperature with an amount of lime of from 0.1 to 20 times the stoichiometric amount required to convert the carbonates present into hydroxide, without taking account of the amount of lime required to precipitate the insoluble calcium compounds, followed by separation and washing of a first precipitate which essentially contains calcium carbonate and a mixture of other organic and inorganic calcium salts, and a hydroxide-enriched liquor, that the mixture of said liquor and the washing liquor of the first precipitate is concentrated by evaporation to give a hydroxide content which is at most equal to 50%, to produce a second precipitate which essentially comprises sodium or potassium sulphate, that the crystals of said second precipitate are separated from their hydroxide-rich mother liquor, and that said hydroxide-rich liquor is recovered.

2. A process for treating solutions according to claim 1 characterised in that the second precipitate is washed and the washing liquor is recycled to the concentration operation.

3. A process for treating solutions according to claim 2 characterised in that the operation of washing the second precipitate is carried out by introducing water.

4. A process for treating solutions according to claim 2 characterised in that the operation of washing the second precipitate is carried out using an aqueous solution produced by dissolving a fraction of the second precipitate until reaching a condition of saturation.

5. A process for treating solutions according to claim 1 characterised in that caustification of the solutions is effected by introducing an amount of lime which is at least equal to the stoichiometric amount required for virtually total conversion of the carbonate present in the liquor into hydroxide.

6. A process for treating solutions according to claim 1 characterised in that controlled caustification of the solutions is effected by introducing an insufficient amount of lime.

7. A process for treating solutions according to claim 1 characterised in that a part of the hydroxide-rich mother liquor which is separated from the second precipitate is treated by acidification and introduction of an alkali metal sulphide or hydrosulphuric acid, to cause precipitation of the molybdenum.

8. A process for treating solutions according to claim 1 characterised in that a part of said solutions is taken off before caustification thereof by means of lime, and then said part is treated by acidification and introduction of an alkali metal sulphide or hydrosulphuric acid, to cause precipitation of the molybdenum.

9. A process for treating solutions according to claim 7 or claim 8 characterised in that the sulphide or hydrosulphuric acid is introduced before, at the same time as or after the acidification step.

10. A process for treating solutions according to claim 1 characterised in that a part of the hydroxide-rich mother liquor which is separated from the second precipitate is treated by introducing a barium compound in an amount which is at least equal to the stoichiometric amount, to cause precipitation of barium organates.

11. A process for treating solutions according to claim 1 characterised in that a fraction of the hydroxide-rich mother liquor which is separated from the second precipitate is treated with one of the means formed by sodium dioxide and hydrogen peroxide, causing 'in situ' degradation of the organic substances.

12. A process for treating solutions according to claim 1 characterised in that a fraction of the hydroxide-rich mother liquor which is separated from the second precipitate is treated by passing said liquor over activated carbon.

13. A process for treating solutions according to claim 1 characterised in that a fraction of the hydroxide-rich mother liquor which is separated from the second precipitate is treated by blowing in carbon dioxide gas for total or partial carbonation of said liquor.

14. A process for treating solutions according to claim 13 characterised in that the carbonation operation is controlled to produce a suspension of sodium or potassium carbonate from which the carbonate is extracted in the solid state by physical separation, the separated liquor being recycled to the carbonation operation.

15. A process for treating solutions according to claims 7 and 8, or claims 7 and 11, or claims 7 and 12, characterised in that the hydroxide-rich mother liquor which is separated from the second precipitate is treated to remove the molybdenum and organic substances, by the combination of two means.

16. A process for treating solutions according to claims 10, 11, 12, 13 and 14 characterised in that the hydroxide-rich mother liquor which is separated from the second precipitate is treated by the combination of one of the means claimed in claim 10, claim 11 or claim 12 with one of the means claimed in claim 13 or claim 14.

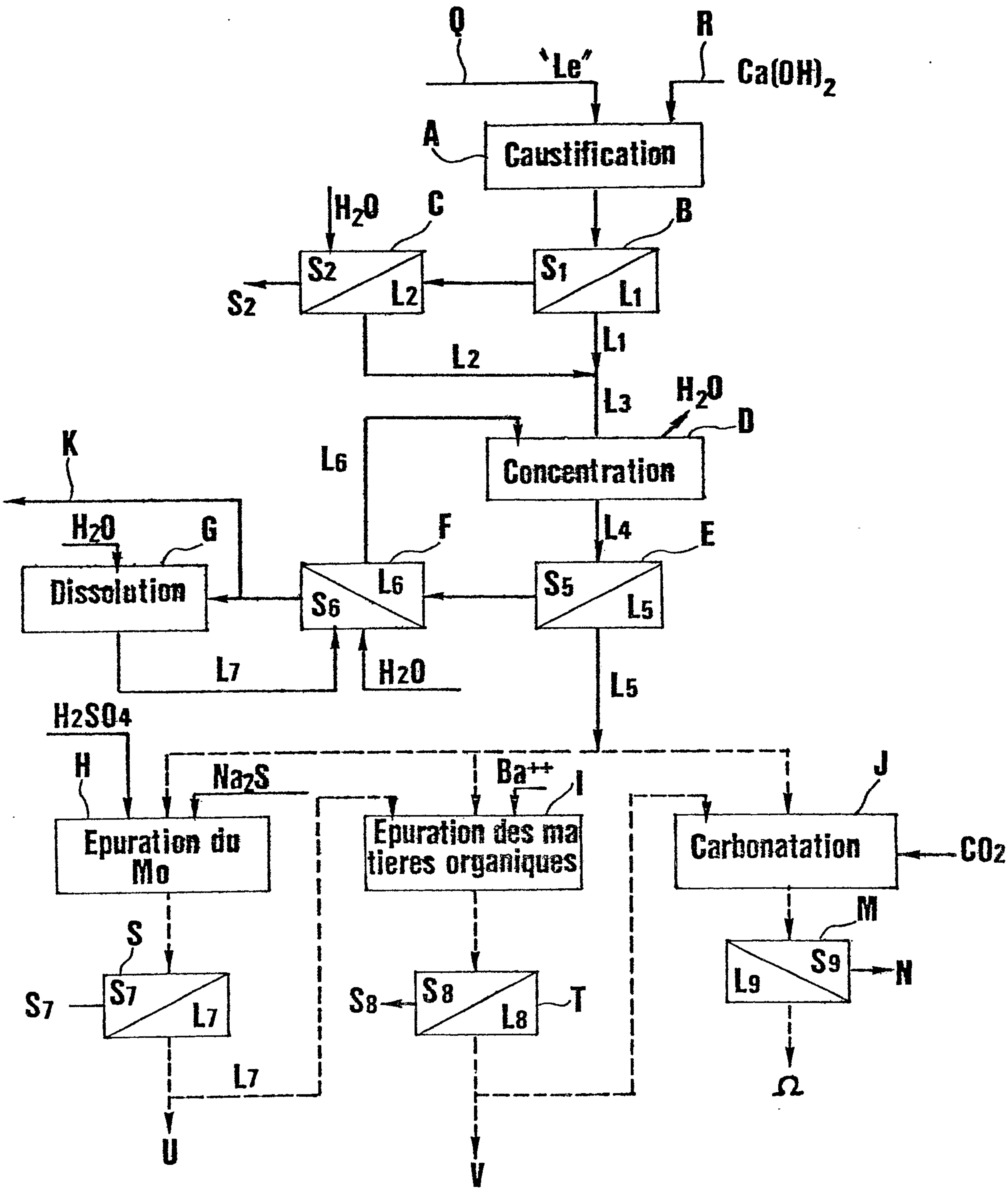

Q
"Le"
R
Ca(OH)2
A
Caustification
H2O
C
B
S2
L2
S1
L1
S2
L1
L2
L3
H2O
D
K
L6
Concentration
H2O
G
F
L4
E
Dissolution
L6
S6
S5
L5
L7
H2O
L5
H2SO4
H
Na2S
Ba++
I
J
Epuration du Mo
Epuration des matieres organiques
Carbonatation
CO2
S
M
S7
S7
L7
S8
S8
L8
T
L9
S9
N
L7
Ω
U
V


FIG.1

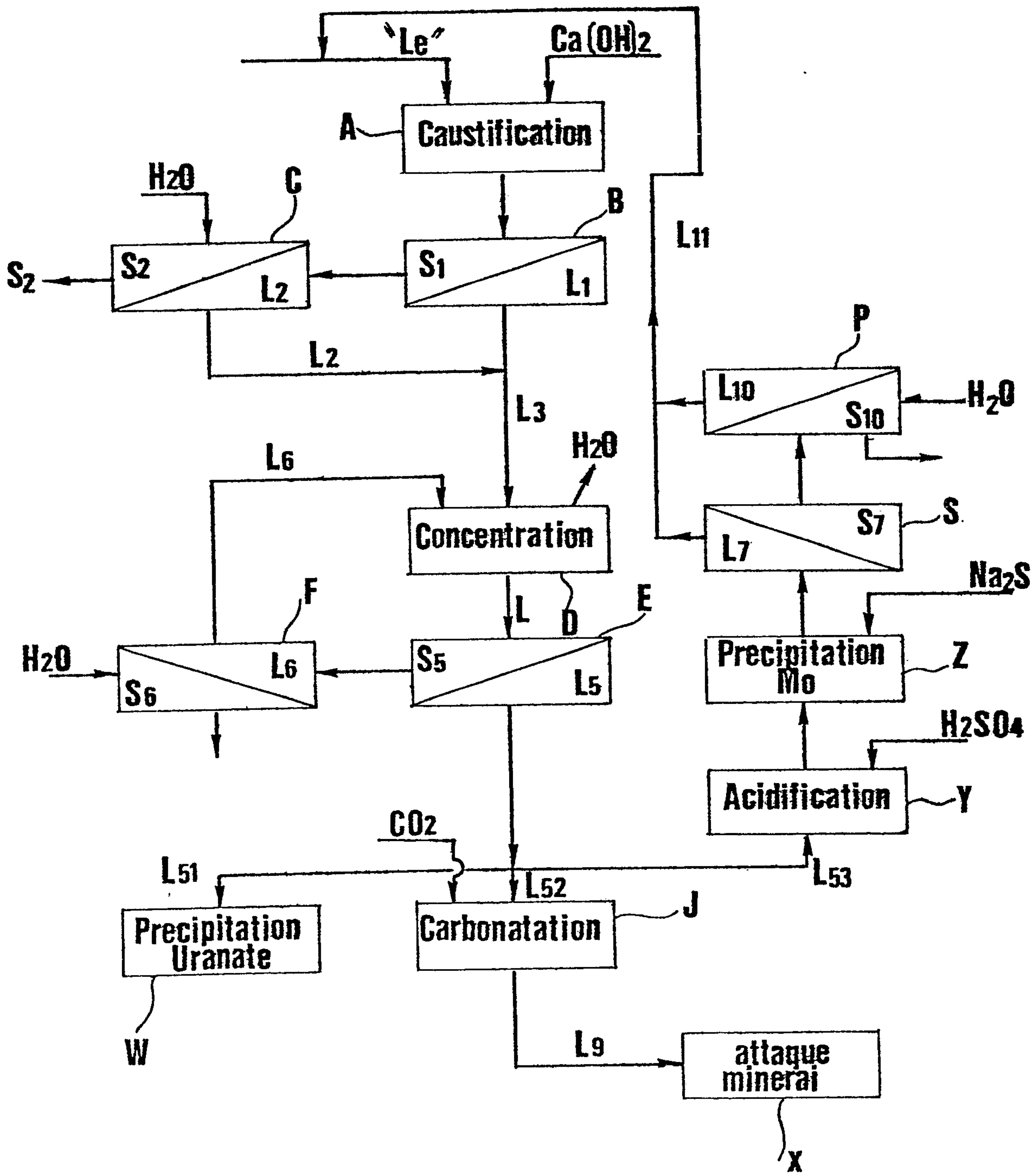
"Le"
Ca(OH)2
A
Caustification
H2O
C
B
S2
S2
L2
S1
L1
L11
L2
L3
P
L10
S10
H2O
L6
H2O
Concentration
S7
S
L7
F
L
D
E
Na2S
H2O
S6
L6
S5
L5
Precipitation Mo
Z
H2SO4
Acidification
Y
CO2
L51
L52
L53
Precipitation Uranate
Carbonatation
J
W
L9
attaque minerai
X

FIG.2

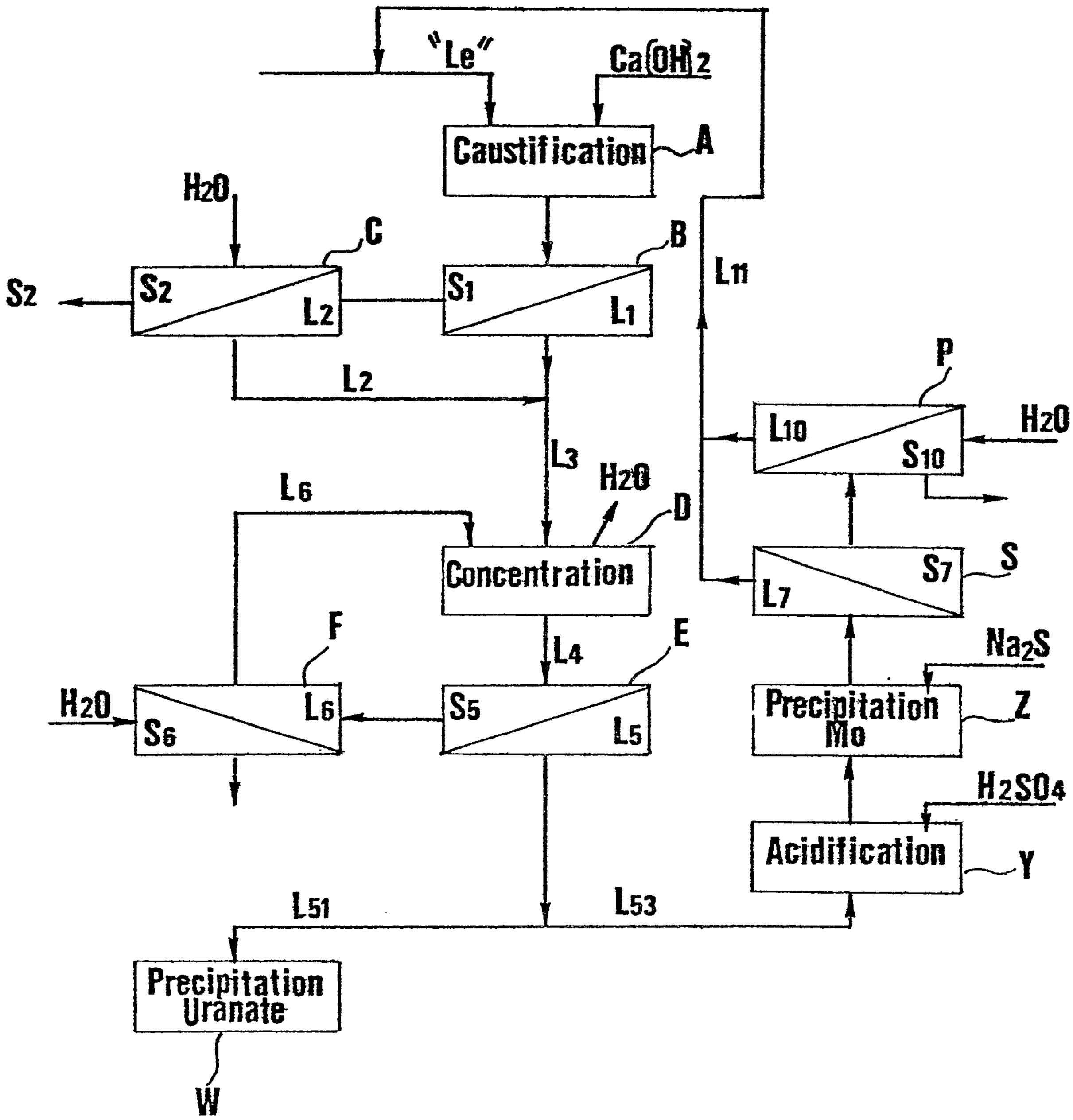

"Le"
Ca(OH)2
Caustification
A
H2O
C
B
S2
S2
L2
S1
L1
L11
L2
P
L10
H2O
S10
L3
H2O
L6
D
Concentration
S
S7
L7
F
E
L4
Na2S
H2O
S6
L6
S5
L5
Precipitation Mo
Z
H2SO4
Acidification
Y
L51
L53
Precipitation Uranate
W


FIG.3

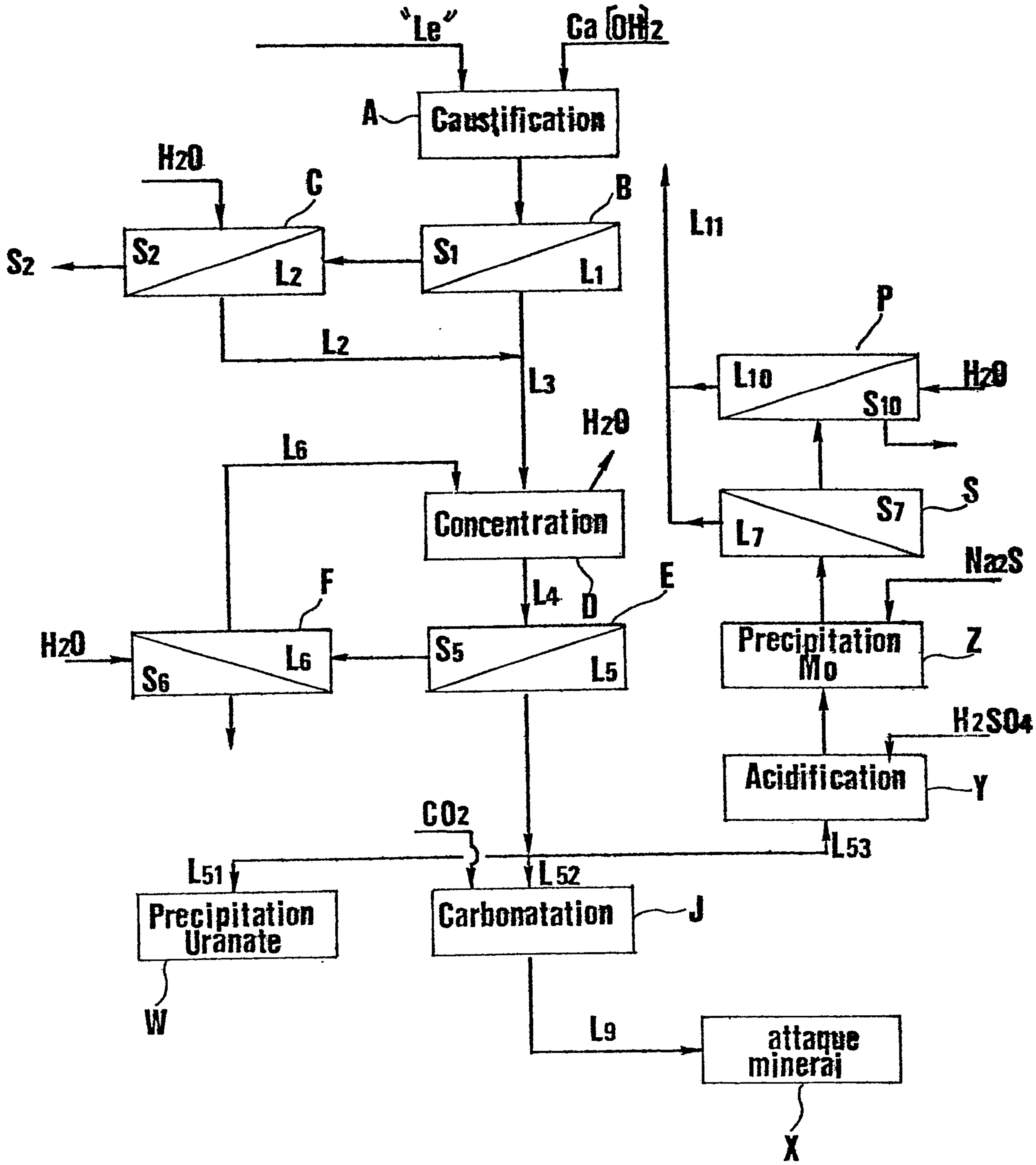
"Le"
Ca (OH)2
A
Caustification
H2O
C
B
S2
S2
L2
S1
L1
L11
P
L2
L3
L10
H2O
S10
H2O
L6
Concentration
S
S7
L7
Na2S
L4
D
E
F
H2O
S5
L5
L6
S6
Precipitation Mo
Z
H2SO4
Acidification
Y
CO2
L53
L51
L52
Precipitation Uranate
Carbonatation
J
W
L9
attaque minerai
X

FIG.4

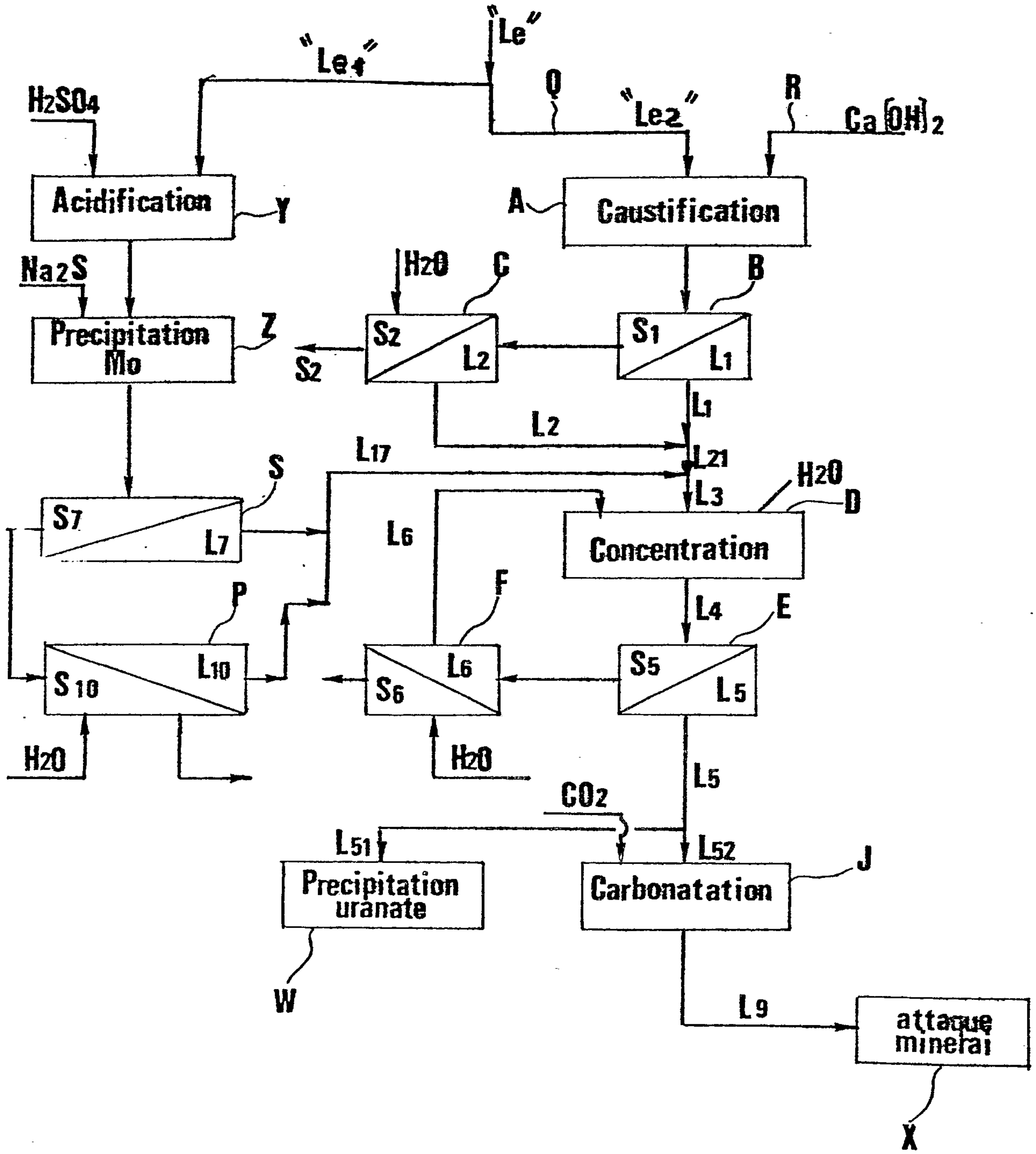
"Le"
"Le1"
Q
"Le2"
R
$H_2SO_4$
$Ca(OH)_2$
Acidification
Y
A
Caustification
$Na_2S$
$H_2O$
C
B
Precipitation Mo
Z
S2
L2
S1
L1
S2
L1
L2
L21
L17
S
L3
$H_2O$
D
S7
L7
L6
Concentration
P
F
L4
E
S10
L10
L6
S6
S5
L5
$H_2O$
$H_2O$
L5
$CO_2$
L51
L52
J
Precipitation uranate
Carbonatation
W
L9
attaque minerai
X

FIG.5